**Europäisches Patentamt**

**European Patent Office**

**Office européen des brevets**

(11) Veröffentlichungsnummer: **0 538 814 A1**

## (12) EUROPÄISCHE PATENTANMELDUNG

(21) Anmeldenummer: **92117989.1**

(22) Anmeldetag: **21.10.92**

(51) Int. Cl.5: **B62M 11/14**

Geänderte Patentansprüche gemäss Regel 86 (2) EPÜ.

(30) Priorität: **22.10.91 DE 4134843**

(43) Veröffentlichungstag der Anmeldung: **28.04.93 Patentblatt 93/17**

(84) Benannte Vertragsstaaten: **AT CH DE FR GB IT LI**

(71) Anmelder: **Albrecht, Bernhard**
**Hippelstrasse 72**
**W-8000 München 82(DE)**

(72) Erfinder: **Albrecht, Bernhard**
**Hippelstrasse 72**
**W-8000 München 82(DE)**

(54) **Getriebeanordnung für Senioren-Fahrräder.**

(57) Getriebeanordnung für Senioren-Fahrräder, wobei eine Hinterrad - Nabenschaltung (9) mit einem Tretkurbelgetriebe (4) so kombiniert ist, daß sich eine etwa gleichmäßig gestaffelte Reihe von verschiedenen Gängen ohne Übersetzungswiederholungen ergibt. Das Tretkubelgetriebe (3) ist völlig geschlossen und ebenso wartungsfrei, wie die Nabenschaltung. Außerdem wird es in gleicher Weise durch einen Seilzug (10) von der Lenkstange her betätigt. Somit ist ein gezieltes und sicheres Schalten aller Gänge ohne besonderes Fingerspitzengefühl gewährleistet. Mit der Getriebeanordnung werden Übersetzungsbereiche in einer Größenordnung erzielt, die bei Fahrrädern bisher unbekannt waren.

FIG. 3

Die Erfindung betrifft eine Getriebeanordnung für Fahrräder nach dem Oberbegriff des Anspruches 1.

Es ist üblich, das Hinterrad von Fahrrädern über eine Kette von einer Tretkurbel aus anzutreiben. Die Übersetzung ergibt sich aus der Zähnezahl der Kettenräder von Tretkurbel und Hinterradnabe zu $i = Z_T / Z_N$. Mit dem Umfang U des Hinterradreifens ist die Entwicklung e (zurückgelegte Wegstrecke) pro Kurbelumdrehung festgelegt zu $e = i \cdot U = i \cdot D \cdot \pi$

Für das Fahren auf ebener Strecke ohne Gegenwind ist eine Übersetzung für die Entwicklung von 4,80 bis 5,60 m pro Kurbelumdrehung zu wählen. Damit wird ein dem menschlichen Körper angemessener Kraftaufwand bei einer günstigen Kurbeldrehzahl von 40 bis 60 Umdrehungen in der Minute erreicht.

Um bei Rückenwind, Gefälle oder Gegenwind und steigendem Gelände einen entsprechend günstigen Kraftaufwand zu erhalten, ist es üblich, mit Gangschaltungen andere Übersetzungsverhältnisse zu schaffen. Hierfür dienen z.B. Kettenradschaltungen mit 2 - 6 Nabenkettenrädern und 1 - 3 Kettenrädern an der Kurbel, bei denen durch Umspringen der Kette die gewünschte Übersetzung gewählt wird.

Normale Tourenräder werden etwa mit einem Kettenrad an der Kurbel mit 40 Zähnen und drei Nabenkettenrädern mit 26 / 22 und 17 Zähnen ausgerüstet. Damit ergeben sich bei 28 " Reifen Entwicklungen zu e = 4,12 / 4,87 / 6,30 Meter pro Kurbelumdrehung. Wegen der geringen Unterschiede der Zähnezahlen ergeben sich kleine Entwicklungsstufen, so daß eine Anpassung nur an geringe Steigungsänderungen möglich ist.

Das größte Entwicklungsverhältnis $V_{max}$ zwischen Berggang und Schnellgang ergibt sich zu $V_{max} = e_1 / e_3$ = 4,12 / 6,3 = 1/1,53.

Das heißt mit anderen Worten: Im Schnellgang wird der 1,53 fache Weg zurückgelegt wie im Berggang.

Übersetzungsbereich 153 % .

Bei Rennrädern oder MTB - Rädern mit drei Kettenrädern an der Kurbel und 6 Nabenkettenrädern ergeben sich theoretisch 18 Gänge. Im Extremfall läßt sich etwa folgende Kombination erreichen:
Kurbelrad: 32 - 42 - 52 Zähne. An der Nabe 6 - facher
Zahnkranz: 13 - 15 - 18 - 22 - 26 - 32 Zähne.
Das ist jedoch eine Ausrüstung für Fachleute. Die Entwicklungswerte e bei 28 " Reifen sind der Tabelle 1 zu entnehmen.

Zunächst muß beachtet werden, daß bestimmte Gänge dieser Kombination nicht verwendet werden dürfen, um einen zu starken Schräglauf der Kette zu vermeiden.
In Tabelle 1 sind Entwicklungswerte mit günstigem Kettenlauf stark umrandet, mit vertretbarem Ketten-Schräglauf gestrichelt umrandet gekennzeichnet. Die Werte mit zu schrägem, nicht vertretbarem Kettenlauf sind durchgestrichen.

Daraus ist ersichtlich, daß nur 10 nutzbare Gänge zur Verfügung stehen. Zudem liegen die Entwicklungswerte in den gestrichelt umrandeten Feldern sehr eng beieinander, so daß effektiv nur 8 unterschiedliche Gänge für den Fahrbetrieb übrig bleiben.

Es bedarf einigen Fingerspitzengefühls, mit beiden Schaltungen so umzugehen, daß der aus den effektiven Entwicklungen e = 8,92 / 7,73 / 6,44 / 5,20 / 4,25 / 3,24 / 2,74 / 2,23 m beabsichtigte Wert sofort erreicht wird. Es liegt also in der Natur solcher Kettenschaltungen, daß die Mehrzahl der theoretisch möglichen Gänge ungenutzt bleibt. Dies folgt aus dem Zwang, die Differenz der Zähnezahlen nebeneinander liegender Kettenräder klein zu halten, damit ein glattes Springen der Kette gewährleistet ist, andererseits aus der Notwendigkeit einer großen Zahl von Kettenrädern, um ein möglichst großes Entwicklungsverhältnis $V_{max}$ zwischen dem kleinsten und dem größten Gang zu erreichen. In diesem bekannte Fall ist dies:
$V_{max}$ = 2,23 / 8,92 = 1 / 4

Übersetzungsbereich 400 % .

Wie bereits erwähnt,sind derartige Kettenschaltungen nicht leicht optimal zu bedienen. Sie müssen zudem gut gewartet werden, weil die dem Springen der Kette dienenden Schaltelemente den Einflüssen der Witterung (Staub, Regen) ausgesetzt sind.
Für Senioren oder technisch weniger interessierte Fahrer sind deshalb Nabenschaltungen auf den Markt gekommen, die kaum einer Wartung bedürfen und sehr bequem und unverwechselbar zu schalten sind.

Bekannt sind Nabenschaltungen mit 3 oder 5 Gängen.
Bei Fahrrädern mit 28 " Reifen und Kettenrädern mit 48 und 22 Zähnen an Kurbel und Nabe ergeben sich die Entwicklungswerte aus Tabelle 2 mit Übersetzungsbereichen von 185 % bzw. 224 % .

Gegenüber der zuvor beschriebenen Rennradauslegung sind diese Übersetzungsbereiche klein. Mit den kleinsten Gängen werden Entwicklungen von 3,6 m bzw. 3,24 m erzielt, die jedoch für ältere Fahrer an Steigungen noch zu groß sind. Gerade für diesen Personenkreis kommt es weniger auf optimale Leistung an, als auf gemächliches und erholsames aber auch stetiges Fahren in abwechslungsreicher Landschaft. Absteigen und Schieben sollte nicht erforderlich sein.

Es ist das Ziel der Erfindung, für Senioren ein bequemes Tourenrad zur Verfügung zu stellen, das diese Bedingungen erfüllt.

Der Erfindung liegt daher die Aufgabe zugrunde, die eingangs genannte bekannte Getriebeanordnung gemäß Oberbegriff des Anspruches 1 dahingehend weiterzubilden, daß sie bei wartungsfreier und leichter Bedienbarkeit eine große Anzahl von echten Gängen (ohne Entwicklungs-Wiederholungen) in einem sehr großen Übersetzungsbereich aufweist.

Diese Aufgabe wird erfindungsgemäß durch die im kennzeichnenden Teil des Anspruches 1 enthaltenen Merkmale gelöst.

Es sind zwar schon Tretkurbelgetriebe bekannt geworden, etwa durch die DE PS 650 386 oder die DE PS 822 350. Diese Getriebe weisen aber nur zwei oder drei Gänge mit geringen Übersetzungsbereichen auf, so daß die für ein Seniorenrad zu fordernden Bedingungen nicht erzielt werden.

In Ausgestaltung der Erfindung ist das Tretkurbelgetriebe als Vorgelegegetriebe ausgebildet. Dadurch ergibt sich eine einfache konstruktive Ausbildung. Das Tretkurbelgetriebe kann auch als Planetengetriebe ausgebildet sein. In weiterer Ausgestaltung der Erfindung weist das Tretkurbelgetriebe zwei unterschiedliche Übersetzungen $i_1$ und $i_2$ auf, die sich mit einer 3 - Gang - bzw. 5 - Gang - Nabenschaltung zu einer gleichmäßig gestaffelten Reihe von 6 bzw. 10 verschiedenen Gängen ergänzen.

Besonders günstig ist es, wenn die Übersetzungen $i_1$ = 1:2,5 = 0,4 und $i_2$ = 1:1 sind. In diesem Fall ergibt sich für ein Tourenrad mit 28 " Reifen, einein Kurbelkettenrad mit 48, einem Nabenkettenrad mit 22 Zähnen und einer 3 - Gang Nabenschaltung die Entwicklungsreihe nach Tabelle 3 .

Von Gang zu Gang liegt demnach eine Vergrößerung der Entwicklung von ca 36 % vor.

Das größte Entwicklungsverhältnis $V_{max}$ zwischen kleinstem und größtem Gang ergibt sich zu:

$$V_{max} = e_{A1} / e_{B3} = 1,43 / 6,63 = 1 / 4,64 .$$

Übersetzungsbereich 464 %.

Es ist selbstverstädlich möglich, durch andere Wahl der Kettenräder die Entwicklungsreihe insgesamt zu verschieben, so daß etwa mit den Kettenrädern 52 und 20 der größte Gang die Entwicklung 7,9 m und der kleinste Gang die Entwicklung 1,7 m erhält. Jedoch dürfte die in Tabelle 3 angegebene Reihe für Senioren richtig liegen, weil die Fahrgeschwindigkeit auf ebener Strecke nicht zu groß wird, andererseits kaum eine Steigung zum Absteigen und Schieben zwingt.

In Verbindung mit einer 5 - Gang Nabenschaltung und den gleichen Übersetzungen $i_1$ = 0,4 und $i_2$ = 1 des Tretkurbelgetriebes ergibt sich für 28 " Reifen bei Kettenrädern von 48 und 22 Zähnen die Entwicklungsreihe nach Tabelle 4 .

Das größte Entwicklungsverhältnis zwischen kleinstem und größtem Gang beträgt:

$$V_{max} = e_{A1} / e_{B5} = 1,30 / 7,30 = 1 / 5,60 .$$

Übersetzungsbereich 560 %

Die Staffelung der Reihe und damit die Vergrößerung der Entwicklung von Gang zu Gang ist natürlich auch abhängig von der Größe der Stufung der Nabenschaltung. Die Stufung zwischen den Gängen A5 und B 1 läßt sich aber bei Verwendung der 5 - Gang Nabenschaltung sehr leicht dadurch an die vorgegebene Staffelung angleichen, daß die Zähnezahl der Zahnräder des Tretkurbelgetriebes geringfügig geändert wird. Mit $i_A$ = 14 . 16 / 26 . 24 und $Z_T : Z_N$ = 48 : 19 ergeben sich die Reihen für:

$i_{ges}$ 0,24/0,28/0,36/0,46/0,54/0,67/0,78/ 1/1,28/1,5
Stufung % 16,7/28 / 28 /17 / 24 /16,7/ 28/28/ 17 und
"e" 1,35/1,58/2,02/2,76/3,03/3,77/4,4/5,63/7,21/8,45 m

Übersetzungsbereich 626 % .

Die Übersetzungsbereiche der erfindungsgemäßen Getriebeanordnung für Senioren - Fahrräder liegen somit noch erheblich höher als bei Rennrädern oder MTB- Rädern.

Weitere Ausgestaltungen der Erfindung sind in den Unteransprüchen 6 bis 8 angegeben.

Nachfolgend wird die Erfindung an einem Ausführungsbeispiel anhand der Zeichnungen näher erläutert. Es zeigen:

Fig. 1     die Getriebeanordnung mit dem Tretkurbelgetriebe in Rahmenmitte
Fig. 2     eine Ansicht des Tretkurbelgetriebes von der linken Seite des Rahmens
Fig. 3     einen Schnitt durch das Tretkurbelgetriebe nach Linie A - A der Fig.2

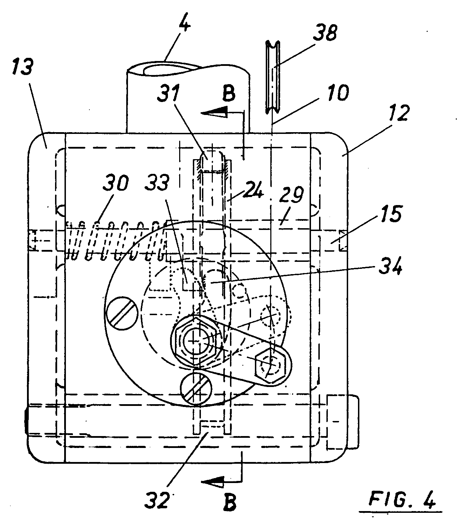

Fig. 4     eine Ansicht des Tretkurbelgetriebes von vorn

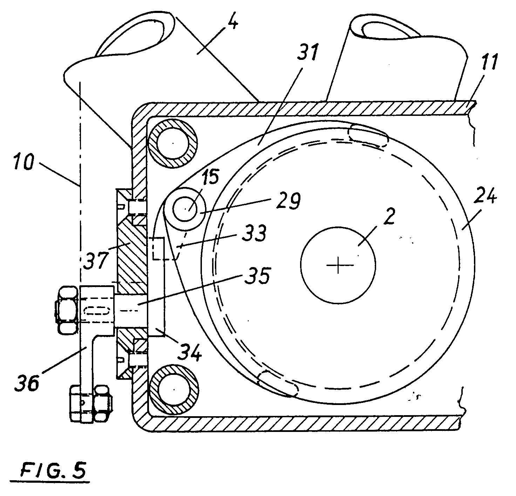

Fig. 5     einen Schnitt durch das Tretkurbelgetriebe nach Linie B - B der Fig. 4

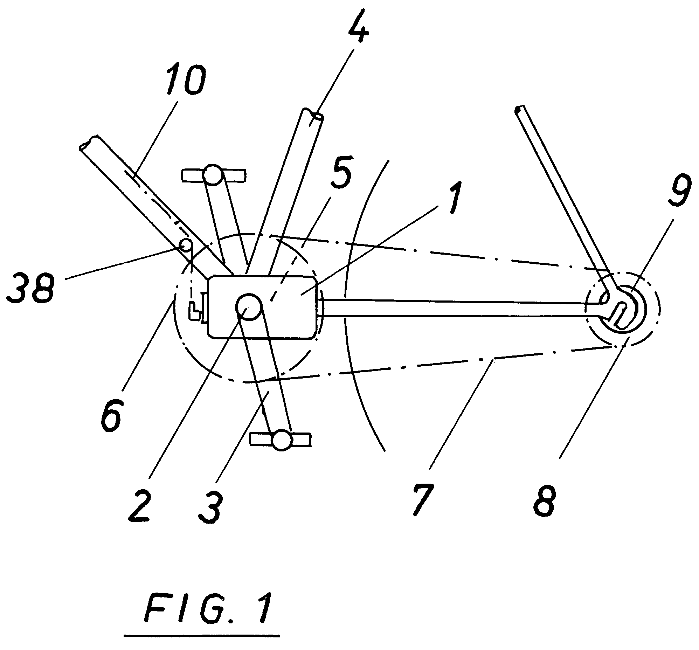

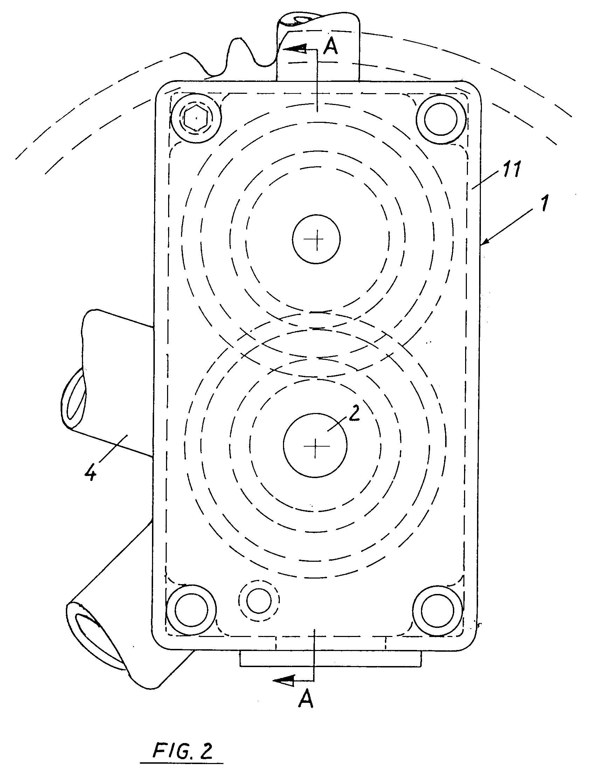

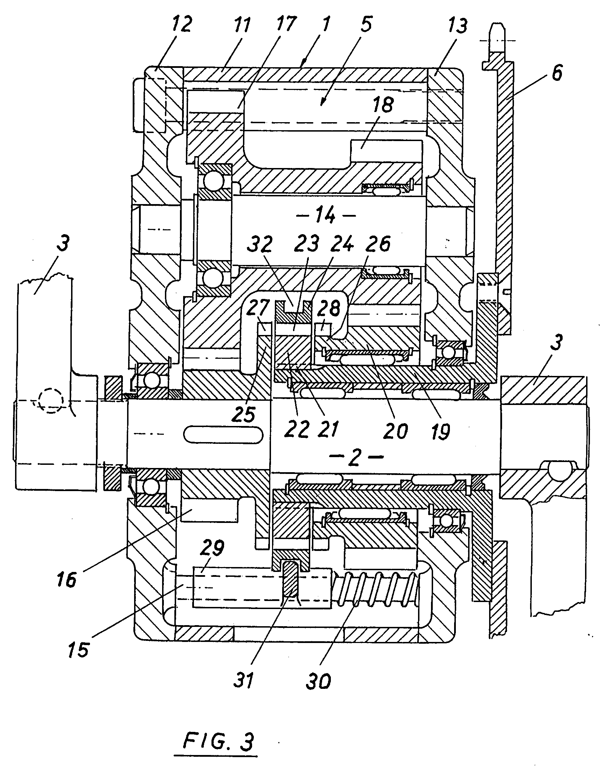

Wie in Fig.1 angedeutet, ist das Lagergehäuse (1) für die Tretkurbelwelle (2) mit den Tretkurbeln (3) wie üblich in der Mitte des Rahmens (4) angeordnet. Es ist so ausgebildet, daß es bequem ein Tretkurbelgetriebe (5) nach den Figuren 2 und 3 aufnehmen kann. Von diesem Getriebe (5) wird das Tretkurbelkettenrad (6) angetrieben, das über die Kette (7) das Nabenkettenrad (8) und die damit verbundene Getriebeschaltung in der Hinterradnabe (9) antreibt. Die Schaltung der Hinterradnabe (9) erfolgt, wie bekannt, mit einem Seilzug, der am rechten Lenkergriff betätigt wird. Die Schaltung des Tretkurbelgetriebes (5) erfolgt ebenfalls mit einem Seilzug (10), der am linken Lenkergriff zu betätigen ist.

Das Lagergehäuse (1) - Fig. 2 und 3 - besteht aus einem rohrförmigen Mittelteil (11) und den Lagerdeckeln (12/13). In diesen Lagerdeckeln sind die Tretkurbelwelle (2), eine Vorgelegewelle (14) und eine Schaltachse (15) gelagert. Mit der Tretkurbelwelle (2) ist ein Ritzel (16) fest verbunden, das ein großes Zahnrad (17) auf der Vorgelegewelle (14) antreibt. Das große Zahnrad (17) ist mit einem kleinen Zahnrad (18) fest verbunden. Bei Betätigung der Kurbeln (2) laufen beide ständig miteinander um. Auf der Seite des Tretkurbelkettenrades (6) ist auf der Tretkurbelwelle (2) eine Flanschbüchse (19) gelagert, die ihrerseits im kettenradseitigen Lagerdeckel (13) gelagert ist und deren Flansch das Kettenrad (6) trägt. Außerdem ist auf der Flanschbüchse (19) ein Zahnrad (20) drehbar gelagert, das mit dem kleinen Zahnrad (18) auf der Vorgelegewelle (14) kämmt und somit bei Betätigung der Kurbeln ebenfalls ständig lose umläuft.

Am inneren Ende trägt die Flanschbüchse (19) über eine Festverzahnung (21) einen inneren Kupplungsring (22), der mit einer Außenverzahnung (23) versehen ist, die mit der Innenverzahnung eines axial auf dem Kupplungsring (22) verschiebbaren Klauenkupplungsring (24) im Eingriff steht. Beidseits des Kupplungsringes (22) sind an dem Ritzel (16), sowie dem Zahnrad (20) Flansche (25/26) angeformt, die mit Außenverzahnungen (27/28) versehen sind, die mit der Außenverzahnung (23) des Kupplungsringes (22) fluchten.

Auf der Schaltachse (15) ist eine Hülse (29) verschiebbar angeordnet, die durch eine Druckfeder (30) in Richtung zum Lagerdeckel (12) gedrückt wird. Die Hülse (29) ist mit einer Schaltgabel (31) fest verbunden, die in eine Ringnut (32) des Klauenkupplungsringes (24) eingreift. Durch den Druck der Druckfeder (30) wird der Klauenkupplungsring (24) mit seiner Innenverzahnung über die Außenverzahnung (27) des Flansches (25) des Ritzels (16) geschoben, bis die Verschiebung durch Anlegen der Hülse (29) an den Lagerdeckel (12) beendet wird. Damit ist die Tretkurbelwelle (2) über Ritzel (16), Klauenkupplungsring (24), Kupplungsring (22) und Flanschbüchse (19) mit dem Tretkurbelkettenrad (6) fest verbunden. Der direkte Gang B (i = 1) ist eingeschaltet.

Wird durch Betätigung des Seilzuges (10) die Schaltgabel (31) gegen den Federdruck verschoben, so gleitet der Klauenkupplungsring (24) über die Außenverzahnung (28) des Flansches (26) von Zahnrad (20). Damit wird die Tretkurbelwelle (2) über Ritzel (16), großes Zahnrad (17), kleines Zahnrad (18), Zahnrad (20), Klauenkupplungsring (24), Kupplungsring (22) und Flanschbüchse (19) mit dem Tretkurbelkettenrad (6) verbunden. Der untersetzte Gang A (z.B. mit Zahnrädern von 15, 25, 16, u. 24 Zähnen: $i = 15 \cdot 16 / 25 \cdot 24 = 0,4$) ist eingeschaltet.

Die Betätigung der Schaltgabel (31) erfolgt über einen Anschlag (33) an der Hülse (29), einen Nocken (34), einen Bolzen (35) und einen Schalthebel (36), der mit dem Seilzug (10) verbunden ist. Der Bolzen (35) ist in einem Deckel (37) gelagert, der in einer Öffnung des Mittelteils (11) des Lagergehäuses (1) befestigt ist. Der Seilzug (10) wird über eine Umlenkrolle (38) auf der Gegenseite des vorderen Rahmenrohres parallel zum Seilzug für die Nabenschaltung geführt.

| Teile - Liste | | | |
|---|---|---|---|
| 1 | Lagergehäuse | 31 | Schaltgabel |
| 2 | Tretkurbelwelle | 32 | Ringnut |
| 3 | Tretkurbel | 33 | Anschlag |
| 4 | Rahmen | 34 | Nocken |
| 5 | Tretkurbelgetriebe | 35 | Bolzen |
| 6 | Tretkurbelkettenrad | 36 | Schalthebel |
| 7 | Kette | 37 | Deckel |
| 8 | Nabenkettenrad | 38 | Umlenkrolle |
| 9 | Hinterradnabe | | |
| 10 | Seilzug | | |
| 11 | Mittelteil des Lagergehäuses | | |
| 12 | Lagerdeckel | | |
| 13 | Lagerdeckel (Kettenradseite) | | |
| 14 | Vorgelegewelle | | |
| 15 | Schaltachse | | |
| 16 | Ritzel | | |
| 17 | großes Zahnrad | | |
| 18 | kleines Zahnrad | | |
| 19 | Flanschbüchse | | |
| 20 | Zahnrad | | |
| 21 | Festverzahnung | | |
| 22 | Kupplungsring | | |
| 23 | Außenverzahnung | | |
| 24 | Klauenkupplungsring | | |
| 25 | Flansch (Ritzel) | | |
| 26 | Flansch (Zahnrad) | | |
| 27 | Außenverzahnung | | |
| 28 | Außenverzahnung | | |
| 29 | Hülse | | |
| 30 | Druckfeder | | |

Entwicklungen "e" bei 28 " Reifen, U = 2,23 m.

| $Z_T$ \ $Z_N$ | 13 | 15 | 18 | 22 | 26 | 32 |
|---|---|---|---|---|---|---|
| 32 | 5,49 | 4,76 | 3,96 | 3,24 | 2,74 | 2,23 |
| 42 | 7,20 | 6,24 | 5,20 | 4,25 | 3,60 | 2,93 |
| 52 | 8,92 | 7,73 | 6,44 | 5,27 | 4,46 | 3,62 |

Günstiger Kettenlauf

Vertretbarer Kettenlauf

Nicht vertretbarer Kettenlauf

Tabelle 1          Übersetzungsbereich   400 %

Entwicklungen "e" bei 28 " Reifen, U = 2,23 m

3 - Gang Naben-Schaltung

| 1 | 2 | 3 |
|---|---|---|
| 3,60 | 4,87 | 6,65 |

$$V_{max} = e_1 / e_3 = 1 / 1,85$$

Übersetzungsbereich   185 %

5 - Gang Naben-Schaltung

| 1 | 2 | 3 | 4 | 5 |
|---|---|---|---|---|
| 3,24 | 3,78 | 4,84 | 6,2 | 7,27 |

$$V_{max} = 1 / 2,24$$

Übersetzungsbereich   224 %

Tabelle 2

Entwicklungen "e" bei 28 " Reifen, U = 2,23 m

Vorgelege: $i_1 = \dfrac{15 \times 16}{25 \times 24} = 0,4$

| Gang des Tretkurbel-Getriebes | Gang der Naben-Schaltung | $i_{ges.}$ | Stufung + % | "e" für $Z_T : Z_N =$ 48 : 22 |
|---|---|---|---|---|
| A<br>($i_1 = 0,4$) | 1 | 0,294 | | 1,43 |
| | 2 | 0,4 | 36 | 1,95 |
| | 3 | 0,54 | 36 | 2,63 |
| | | | 36 | |
| B<br>($i_2 = 1$) | 1 | 0,734 | | 3,57 |
| | 2 | 1 | 36 | 4,87 |
| | 3 | 1,362 | 36 | 6,63 |

Übersetzungsbereich 463 %              Tabelle 3

| Gang des Tretkurbel-Getriebes | Gang der Naben-Schaltung | $i_{ges.}$ | Stufung + % | "e" für $Z_T : Z_N =$ 48 : 22 |
|---|---|---|---|---|
| A<br>($i_1 = 0,4$) | 1 | 0,268 | | 1,30 |
| | 2 | 0,312 | 16,4 | 1,52 |
| | 3 | 0,40 | 28,2 | 1,95 |
| | 4 | 0,512 | 28,0 | 2,49 |
| | 5 | 0,6 | 17,2 | 2,92 |
| | | | 11,7 | |
| B<br>($i_2 = 1$) | 1 | 0,67 | | 3,26 |
| | 2 | 0,73 | 16,4 | 3,80 |
| | 3 | 1 | 28,2 | 4,37 |
| | 4 | 1,28 | 28 | 6,23 |
| | 5 | 1,5 | 17,2 | 7,30 |

Übersetzungsbereich 560 %              Tabelle 4

**Patentansprüche**

1. Getriebeanordnung für Fahrräder mit in Rahmenmitte gelagerten Tretkurbeln (3), mit Tretkurbel-Kettenrad (6), einer Antriebskette (7) für das Hinterrad und einem an der Hinterradnabe (9) gelagerten Nabenkettenrad (8), sowie mindestens einer Gangschaltung im Bereich der Hinterradnabe (9) und/oder der Tretkurbeln dadurch gekennzeichnet, daß zusätzlich zu einer Getriebeschaltung in der Hinterradnabe (9) im Lagergehäuse (1) für die Tretkurbelwelle (2) ein Tretkurbelgetriebe (5) eingebaut ist.

2. Getriebeanordnung nach Anspruch 1 dadurch gekennzeichnet, daß das Tretkurbelgetriebe (5) als Vorgelegegetriebe ausgebildet ist.

3. Getriebeanordnung nach Anspruch 1 dadurch gekennzeichnet, daß das Tretkurbelgetriebe als Planetengetriebe ausgebildet ist.

4. Getriebeanordnung nach Ansprüchen 1 und 2 oder 3 dadurch gekennzeichnet, daß das Tretkurbelgetriebe (5) zwei unterschiedliche Übersetzungen $i_1$ , $i_2$ aufweist, die sich mit einer 3 - Gang bzw. 5 - Gang Nabenschaltung zu einer etwa gleichmäßig gestaffelten Reihe von 6 bzw. 10 verschiedenen Gängen ergänzen.

5. Getriebeanordnung nach Anspruch 4 dadurch gekennzeichnet, daß die Übersetzungen $i_1$ = 1 : 2,5 und $i_2$ = 1 : 1 sind.

6. Getriebeanordnung nach Anspruch 2 dadurch gekennzeichnet, daß die beiden auf der Vorgelegewelle (14) gelagerten Zahnräder (17 / 18) miteinander verbunden sind.

7. Getriebeanordnung nach Anspruch 6 dadurch gekennzeichnet, daß die auf der Tretkurbelwelle (2) gelagerten Zahnräder (16 / 20) wechselweise durch eine Klauenkupplung (24) einschaltbar sind.

8. Getriebeanordnung nach Anspruch 7 dadurch gekennzeichnet, daß die Klauenkupplung (24) durch einen Seilzug (10) von der Lenkstange her betätigbar ist.

**Geänderte Patentansprüche gemaß Regel 86 (2) EPÜ**

1. Getriebeanordnung für Fahrräder mit in Rahmenmitte gelagerten Tretkurbeln (3), mit Tretkurbel-Kettenrad (6), einer Antriebskette (7) für das Hinterrad, einem an der Hinterradnabe (9) gelagerten Nabenkettenrad (8), einer Gangschaltung im Bereich der Hinterradnabe (9) und einer Gangschaltung im Bereich der Tretkurbeln, wobei das Tretkurbelgetriebe (5) im Lagergehäuse (1) für die Tretkurbelwelle (2) eingebaut ist, wobei das Fahrrad mit stets vorwärts gerichteter Tretrichtung antreibbar ist und die Nabenschaltung (9) mit einer Rücktrittbremse ausgerüstet ist, wobei das Tretkurbelgetriebe (5) mit zwei auf eine 3 - Gang bzw. 5 - Gang - Nabenschaltung genau abgestimmten Übersetzungen $i_1$ / $i_2$ ausgestattet ist, die sich mit den Gängen der Nabenschaltung zu einer durchgehend, nahezu gleichmäßig gestaffelten Reihe von 6 bzw. 10 verschiedenen Gängen ergänzen und wobei die Reihe einen Übersetzungsbereich $i_{max}/i_{min}$ bis zu 700 % ohne Übersetzungswiederholungen aufweist.

2. Getriebeanordnung nach Anspruch 1, bei der die Übersetzungen des Tretkurbelgetriebes (5) $i_1$ = 1 : 2,5 und $i_2$ = 1 : 1 sind.

3. Getriebeanordnung nach Anspruch 1, wobei die Übersetzungen des Tretkurbelgetriebes (5) $i_1$ = 14 : 39 und $i_2$ = 1 : 1 sind.

4. Getriebeanordnung nach Anspruch 1, wobei die Übersetzungen des Tretkurbelgetriebes $i_1$ = 26 : 81 und $i_2$ = 1 : 1 sind.

5. Getriebeanordnung nach einem der Ansprüche 1 bis 4, bei der das Tretkurbelgetriebe (5) durch einen Seilzug (10) von der Lenkstange her betätigbar ist.

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-507 380 (WANDERER-WERKE)<br>* das ganze Dokument *<br>--- | 1-8 | B62M11/14 |
| A | DE-A-3 827 819 (SCHLUMPF F.)<br>* Spalte 3, Zeile 15 - Zeile 44 *<br>--- | 1,4 | |
| A | US-A-4 782 722 (POWELL)<br>* Zusammenfassung *<br>--- | 1,4 | |
| A | GB-A-418 716 (LUNDQVIST)<br>* Abbildungen 1-11 *<br>----- | 1-8 | |

RECHERCHIERTE
SACHGEBIETE (Int. Cl.5)

B62M

Der vorliegende Recherchenbericht wurde für alle Patentansprüche erstellt

| Recherchenort | Abschlußdatum der Recherche | Prüfer |
|---|---|---|
| DEN HAAG | 01 FEBRUAR 1993 | DENICOLAI G. |

EPO FORM 1503 03.82 (P0400)